# EUROPÄISCHE PATENTSCHRIFT

(11) **EP 0 392 271 B1**
(45) Veröffentlichungstag und Bekanntmachung des Hinweises auf die Patenterteilung: **29.09.1993**
(21) Anmeldenummer: 90105994.9
(22) Anmeldetag: 29.03.1990
(51) Int. Cl.: G01F 1/42

(54) **Vorrichtung zur Messung des Durchflusses und/oder von Wärmemengen**
Measuring device for fluid flow and/or quantities of heat
Dispositif de mesure de débit et/ou de quantités de chaleur

(30) Priorität: 03.04.1989 CH 1214/89; 08.03.1990 CH 744/90
(43) Veröffentlichungstag der Anmeldung: 17.10.1990
(73) Patentinhaber: Landis & Gyr Business Support AG, 6301 Zug (CH)
(72) Erfinder: Ries, Peter, Dr., CH-5734 Reinach (CH); Nauer, Paul, CH-6312 Steinhausen (CH); Huber, Wolfgang, CH-6330 Cham (CH)
(74) Vertreter: Müller, Hans-Jürgen, Dipl.-Ing.

(56) Entgegenhaltungen:
- EP-A- 0 219 489
- EP-A- 0 242 825
- EP-A- 0 370 557
- DE-A- 1 473 411
- DE-A- 2 414 713
- DE-A- 3 244 668
- DE-A- 3 700 898
- DE-C- 839 870
- GB-A- 2 026 704
- NL-A- 8 600 247
- US-A- 2 944 420
- US-A- 4 750 464
- ENGINEERING, MATERIALS AND DESIGN. vol. 19, no. 12, Dezember 1975, LONDON GB Seite 42 "Sliding valve with segmented orifice operates efficiently over full range of flow"

## Beschreibung

Die Erfindung bezieht sich auf eine Vorrichtung zur Messung des Durchflusses und/oder von Wärmemengen gemäß dem Oberbegriff des Anspruchs 1.

Eine Vorrichtung zur Messung von Durchfluß- und Wärmemengen ist aus der DE-A- 32 44 668 bekannt. Zur Messung der Wärmemenge werden die Differenz von Vorlauf- und die Rücklauftemperatur eines Heizkreises, der Durchflußquerschnitt in Form des Ventilhubs sowie die am Absperrorgan erzeugte Druckdifferenz ermittelt, einer elektronischen Logik zugeführt, verknüpft, angezeigt, aufsummiert und wieder angezeigt.

Für die Durchflußmessung ist es aus der DE-A- 24 14 713 bekannt, zur Differenzdruckmessung eine Mehrbereichsmeßblende zu verwenden, deren unterschiedlich große Bohrungen in Abhängigkeit von der Größe des Differenzdrucks in den Strömungsweg eingefügt werden.

Aus der EP-A2-0 242 825 ist eine Vorrichtung bekannt, mit der sich unterschiedliche Meßblenden in eine Rohrleitung einsetzen lassen.

Bekannt ist aus der DE-A- 32 10 901 eine Vorrichtung zur Ermittlung der Warmwassermenge und des Wärmeverbrauchs, bei der die Ventilöffnungsweite gemessen und daraus die Warmwassermenge abgeleitet wird. Der wirksame Differenzdruck wird nicht erfaßt, so daß bei schwankendem Differenzdruck zwangsläufig relativ große Meßfehler entstehen können.

Bekannt ist aus der DE-A- 37 00 898 ein Mengenregelventil, bei dem der Druck und die Temperatur vor und hinter dem Ventil sowie der Öffnungsquerschnitt des Ventils gemessen und mit einem Rechner weiter verarbeitet werden.

Aus der DE-A- 0 309 643 ist außerdem ein Mengenregelventil bekannt, bei dem die Mittel zur Erfassung des Differenzdrucks über dem Ventil innerhalb des Schließkörpers angeordnet sind.

Selbst wenn die tatsächliche Druckdifferenz gemessen wird, besteht das Problem, daß bei sehr kleinen Durchflüssen Meßfehler entstehen, die nicht zu tolerieren sind. In der DE-Z "Fernwärme international" 17(1988), H. 1, S. 23-35 ist auf die auftretenden Probleme hingewiesen. Bei Durchflußmeß- und -steuersystemen nach dem Prinzip der Wirkdruckmessung besteht grundsätzlich das Problem, daß die Erfassungsgröße Druckdifferenz eine Wurzelfunktion der gewünschten Größe Strömungsgeschwindigkeit darstellt. Das Problem äußert sich in der erzielbaren Genauigkeit der Messung. Erfolgt die Messung des Differenzdruckes genügend genau in einem Bereich zwischen 10 und 100 % des Nenndurchflusses der Meßeinrichtung, also in einem Bereich 1 : 10, so stehen die zugehörigen Strömungsgeschwindigkeiten im Verhältnis 1 : √10. Daraus folgt, daß gewöhnliche Meßeinrichtungen für Strömungsgeschwindigkeiten nur einen kleinen Meßbereich mit genügender Meßgenauigkeit besitzen. Daraus folgt ein entsprechend kleiner Meßbereich auch bei der Wärmemengenerfassung.

Der Erfindung liegt die Aufgabe zugrunde, eine kostengünstig herstellbare Vorrichtung zur Messung von Wärmemengen zu schaffen, deren Meßbereich genügender Genauigkeit gegenüber dem Bekannten deutlich größer ist und deren Drosselorgan in Flüssigkeitskreisläufen nicht zum Festsitzen neigt.

Die genannte Aufgabe wird bei einer Vorrichtung der gattungsgemäßen Art durch die im Kennzeichen des Anspruchs 1 angegebenen Merkmale gelöst. Vorteilhafte Ausgestaltungen ergeben sich aus den Unteransprüchen.

Nachfolgend werden Ausführungsbeispiele der Erfindung anhand der Zeichnung näher erläutert.

Es zeigen:
- Fig. 1: ein Blockschema einer Vorrichtung mit einem zweistufigen Drosselorgan,
- Fig. 2: ein Blockschema einer Vorrichtung mit einem dreistufigen Drosselorgan,
- Fig. 3: eine Meßvorrichtung zur Erfassung der Druckdifferenz und
- Fig. 4: ein schaltbares Drosselorgan mit Mitteln zur Erfassung der Druckdifferenz in der Schließstellung.

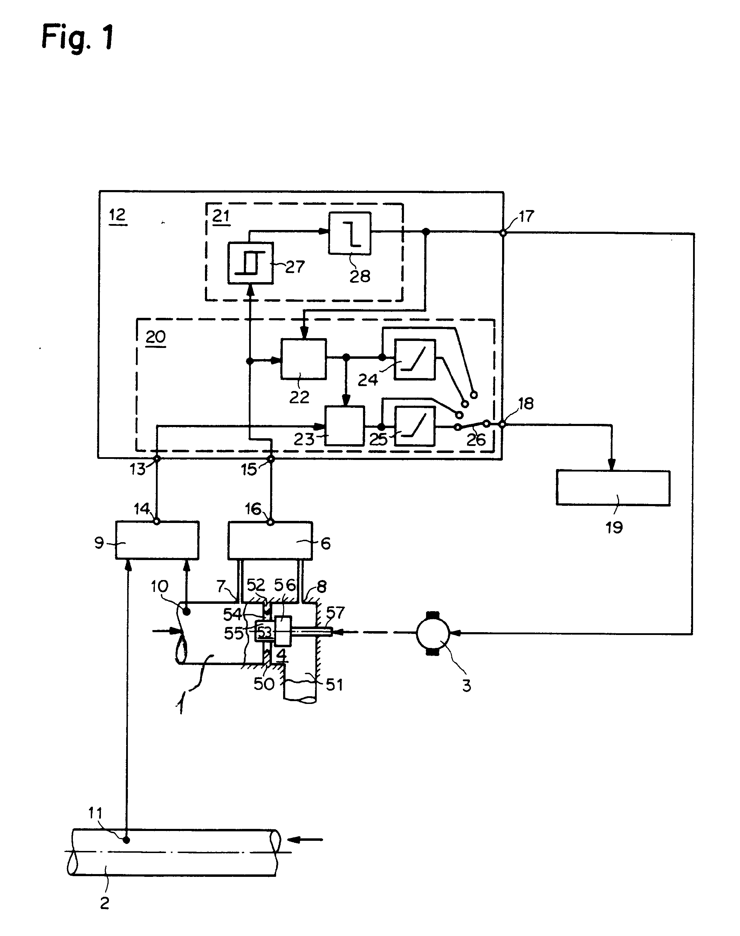

In der Fig. 1 bedeutet 1 eine Vorlaufleitung und 2 eine Rücklaufleitung eines Heizkreises. In der Vorlaufleitung 1 ist ein von einem Antrieb 3 betätigtes Drosselorgan 4 eingebaut. Dieses Drosselorgan 4 besitzt ein Gehäuse 50, das einen Strömungskanal 51 für das Strömungsmedium umschließt. Im Zuge des Strömungskanals 51 ist eine Kreislochblende 52 quer zur Strömungsrichtung angeordnet. In die Öffnung der Kreislochblende 52 taucht ein Verdrängungskörper 53 ein, wodurch ein Ringspalt 54 offen bleibt, der den wirksamen Querschnitt des Drosselorgans darstellt. Der Verdrängungskörper 53 besteht aus einzelnen Zylindern 55, 56 mit diskret abgestuften Außendurchmessern. Der Verdrängungskörper 53 ist mittels einer Welle 57 im Gehäuse 50 längs seiner Achse seitenverschieblich gelagert, wobei die Position des Verdrängungskörpers 53 durch den Antrieb 3 verändert werden kann. Befindet sich der Zylinder 56 innerhalb der Kreislochblende 52, so entspricht dies einer Stellung I. Befindet sich der Zylinder 55 innerhalb der Kreislochblende 52, wie die Fig. dies zeigt, so entspricht dies einer Stellung II.

Mit 6 ist ein Differenzdrucksensor bezeichnet, der über eine erste Öffnung 7 mit dem Raum vor der Kreislochblende 52 und über eine zweite Öffnung 8 mit dem Raum hinter der Kreislochblende 52 verbunden ist.

Mit 9 ist ein Temperaturdifferenz-Erfassungsglied bezeichnet, das die Temperatur des Strömungsmediums in der Vorlaufleitung 1 mittels einer ersten Meßstelle 10 und in der Rücklaufleitung 2 mittels einer zweiten Meßstelle 11 erfaßt und daraus die Temperaturdifferenz zwischen Vorlaufleitung 1 und Rücklaufleitung 2 bildet.

Mit 12 ist ein Rechner bezeichnet. Dieser verfügt über einen ersten Eingang 13, der mit einem Ausgang 14 des Temperaturdifferenz-Erfassungsglieds 9 verbunden ist, und über einen zweiten Eingang 15, der mit einem Ausgang 16 des Differenzdrucksensors 6 verbunden ist. Der Rechner 12 verfügt über einen ersten Ausgang 17, der mit dem Antrieb 3 verbunden ist, und über einen zweiten Ausgang 18, an den eine Anzeige 19 angeschlossen ist.

Nachfolgend wird der interne Aufbau des Rechners 12 symbolisch beschrieben. Diese Beschreibung beruht auf einem analogen Rechner. Ebenso gut kann der Rechner 12 ein digitaler Rechner sein. Dessen Funktionen lassen sich aus der Beschreibung des analogen Rechners ohne weiteres ableiten. Selbstverständlich sind bei einem digitalen Rechner an den Ein- und Ausgängen Analog-Digital-Wandler bzw. Digital-Analog-Wandler vorhanden.

Der Rechner 12 besteht aus einem im wesentlichen der Berechnung von Durchfluß- und Wärmemengen-Kennzahlen dienenden Rechenblock 20 und einem im wesentlichen der Steuerung des Drosselorgans 4 dienenden Steuerblock 21. Der Rechenblock 20 umfaßt einen ersten Multiplizierer 22, einen zweiten Multiplizierer 23, einen ersten Integrator 24, einen zweiten Integrator 25 und einen Umschalter 26. Der Steuerblock 21 umfaßt einen Schwellwertschalter 27 und ein Verzögerungsglied 28, welches eine Abfallverzögerung bewirkt und somit ein HIGH-Signal verlängert.

Der Schwellwertschalter 27 hat folgendes Schaltverhalten: Unterhalb eines Differenzdrucks pₐᵤₛ hat sein Ausgang LOW-Signal. Bei steigendem Wert des Differenzdrucks wechselt sein Ausgangssignal von LOW auf HIGH, sobald der Differenzdruck über den oberen Schwellenwert pₑᵢₙ steigt und bei dann fallendem Wert des Differenzdrucks wechselt sein Ausgangssignal von HIGH auf LOW, sobald der Differenzdruck wieder unter den unteren Schwellenwert pₐᵤₛ fällt. Es besteht also eine Hysterese der Größe pₑᵢₙ - pₐᵤₛ.

Der Eingang 13 des Rechners 12 ist mit dem Eingang des Multiplizierers 23 verbunden. Der Eingang 15 ist sowohl mit einem ersten Eingang des Multiplizierers 22 als auch mit dem Eingang des Schwellwertschalters 27 verbunden. Der Ausgang des Schwellwertschalters 27 ist mit dem Eingang des Verzögerungsglieds 28 verbunden, dessen Ausgang wiederum mit dem Ausgang 17 des Rechners 12 als auch mit einem zweiten Eingang des Multiplizierers 22. Der Ausgang des Multiplizierers 22 führt sowohl auf einen zweiten Eingang des Multiplizierers 23 als auch auf den Eingang des Integrators 24 und direkt auf einen ersten Kontakt eines Umschalters 26. Der Ausgang des Integrators 24 ist mit einem zweiten Kontakt des Umschalters 26 verbunden. In gleicher Weise ist der Ausgang des Multiplizierers 23 mit einem dritten Kontakt des Umschalters 26 verbunden und mit dem Eingang des Integrators 25. Dessen Ausgang ist mit einem vierten Kontakt des Umschalters 26 verbunden. Der Mittelkontakt des Umschalters 26 führt zum Ausgang 18.

Nachfolgend wird die Funktion dieser Vorrichtung beschrieben. Es sei angenommen, das Drosselorgan 4 befinde sich in der in der Fig. 1 gezeigten Stellung, bei der die größere Öffnung wirksam ist. Diese Stellung wird als Stellung II bezeichnet. Das Ausgangssignal des Differenzdrucksensors 6 gelangt an den ersten Eingang des Multiplizierers 22, an dessen zweitem Eingang ein Signal anliegt, das darüber Auskunft gibt, ob sich das Drosselorgan 4 in der Stellung I oder in der Stellung II befindet. Dieses Signal ist in der Stellung II HIGH. Später wird noch beschrieben, wie das Signal und dessen Wechsel zustandekommt. Im Multiplizierer 22 ist zu jeder dieser Stellungen und damit zu den Signalen HIGH und LOW ein den Durchfluß in der jeweiligen Stellung charakterisierender Beiwert abgespeichert. Der Multiplizierer 22 multipliziert nun diesen Beiwert mit dem Signal des Differenzdrucksensors 6 und ermittelt so eine Durchfluß-Kenngröße. Diese Durchfluß-Kenngröße steht am Ausgang des Multiplizierers 22 an und wird dann von der Anzeige 19 angezeigt, wenn sich der Umschalter 26 in der entsprechenden Stellung befindet. Die Durchfluß-Kenngröße wird außerdem dem Integrator 24 zugeführt. Am Ausgang des Integrators 24 steht ein Signal an, das dem kumulierten Durchfluß entspricht. Dieser Wert kann ebenfalls angezeigt werden, wenn sich der Umschalter 26 in der entsprechenden Stellung befindet.

Das Ausgangssignal des Temperaturdifferenz-Erfassungsglieds 9 gelangt auf den ersten Eingang des Multiplizierers 23, an dessen zweitem Eingang die Durchfluß-Kenngröße anliegt. Diese beiden Größen werden vom Multiplizierer 23 multipliziert, woraus sich der Wärmestrom ergibt, der am Ausgang des Multiplizierers 23 ansteht und angezeigt werden kann, wenn sich der Umschalter 26 in der entsprechenden Stellung befindet. Das Ausgangssignal des Multiplizierers 23 wird außerdem dem Integrator 25 zugeführt, in dem der Wärmestrom zur Wärmemenge kumuliert wird. Auch diese Wärmemenge kann angezeigt werden, wenn sich der Umschalter 26 in der entsprechenden Stellung befindet. Diese Stellung ist in der Fig. 1 dargestellt.

Es sei nun angenommen, der Durchfluß durch das Drosselorgan 4 sinke. Damit sinkt auch der Differenzdruck, der mit dem Differenzdrucksensor 6 erfaßt und dem Schwellwertschalter 27 zugeführt wird. Der Schwellwertschalter 27 wertet dieses Signal aus. Unterschreitet das Signal den das Schaltverhalten des Schwellwertschalters 27 charakterisierenden unteren Schwellenwert pₐᵤₛ, so wechselt das Signal am Ausgang des Schwellwertschalters 27 von HIGH auf LOW. Dieser Signalwechsel erscheint um eine kurze Zeit verzögert auch am Ausgang des Verzögerungsglieds 28. Durch diesen Signalwechsel wird der Antrieb 3 so angesteuert, daß er das Drosselorgan 4 bewegt, und zwar so, daß der kleinere Zylinder 55 aus der Kreislochblende 52 herausbewegt und der größere Zylinder 56 in die Kreislochblende 52 hineinbewegt wird, so daß nun ein kleinerer Ringspalt 54 den wirksamen Querschnitt des Drosselorgans 4 darstellt. Dies entspricht der Stellung I.

Gleichzeitig mit der Verstellung des Drosselorgans 4 erhält auch der Multiplizierer 22 die Information über den Stellungswechsel. An seinem zweiten Eingang liegt nun das LOW-Signal an. Folglich ist im Multiplizierer 22 der zu diesem LOW-Signal gehörende Beiwert für den Durchfluß aktiviert und dieser wird im Multiplizierer 22 mit dem Signal des Differenzdrucksensors 6 multipliziert. Dieses Signal ist nun wegen des kleineren wirksamen Querschnitts des Drosselorgans 4 größer. Somit wird der in der Stellung I gegebene Durchfluß gemessen, der wie zuvor beschrieben weiterverarbeitet wird.

Nimmt nun der Durchfluß wieder zu, so wird auch die gemessene Druckdifferenz größer. Überschreitet die Druckdifferenz den das Schaltverhalten des Schwellwertschalters 27 charakterisierenden oberen Schwellenwert pₑᵢₙ, so wechselt das Signal an dessen Ausgang auf HIGH. Dieser Signalwechsel von LOW auf HIGH bewirkt wiederum das Ansteuern des Antriebs 3, so daß dieser wieder in die Stellung II schaltet. Gleichzeitig tritt das HIGH-Signal auch am zweiten Eingang des Multiplizierers 22 auf, so daß nun wiederum der zur Stellung II gehörende Durchfluß-Beiwert bei der Multiplikation berücksichtigt wird.

Die durch das Verzögerungsglied 28 verursachte Zeitverzögerung des Signalwechsels von HIGH auf LOW verhindert ein Flattern des Drosselorgans 4. Die Zeit darf aber nicht beliebig groß sein, weil sonst die Meßgenauigkeit der Vorrichtung ungünstig beeinflußt wird.

Mit der beschriebenen Vorrichtung wird eine automatische Meßbereichsumschaltung zwischen zwei Meßbereichen erreicht. Statt zweier Meßbereiche können auch drei oder mehr vorgesehen werden, wenn entsprechend mehr verschiedene Stellungen des Drosselorgans 4 und mehr Schwellwertschalter 27, jeweils mit unterschiedlichen Schaltpunkten, vorhanden sind. Dies wird dadurch ermöglicht, daß statt der dargestellten zwei unterschiedlich großen Zylinder 55, 56 deren drei oder mehr vorgesehen sind, um damit mehrere verschieden große Ringspalte 54 zu verwirklichen. Das Drosselorgan 4 ist damit mehrstufig schaltbar.

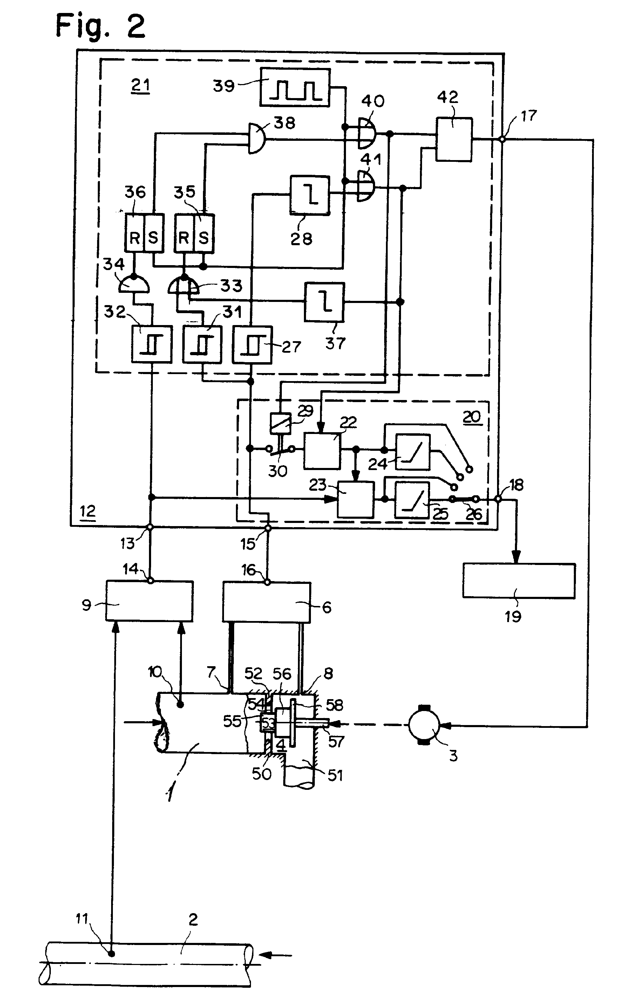

Während das Blockschema der Fig. 1 ein zweistufiges Drosselorgan 4 zeigt, das eine erste Stellung I und eine zweite Stellung II einnehmen kann, zeigt die Fig. 2 ein dreistufiges Drosselorgan 4. Es ist vorteilhaft, wenn das Drosselorgan 4 eine dritte Stellung einnehmen kann (Stellung 0), in der das Drosselorgan 4 den Durchtritt des Strömungsmediums unterbindet. Der Verdrängungskörper 53 umfaßt noch einen Teller 58, dessen Außendurchmesser größer ist als die Öffnung der Kreislochblende 52, so daß die Kreislochblende 52 durch diesen Teller 58 verschließbar ist. Diese Position entspricht der Stellung 0.

Der Rechner 12 hat in diesem Fall einen gegenüber dem zweistufigen Drosselorgan 4 etwas anderen Aufbau, weil er nicht nur in der Lage sein muß, den Antrieb 3 in die Stellungen I und II zu steuern, sondern zusätzlich noch in die Stellung 0.

Die Fig. 2 zeigt das Blockschema mit einem dreistufigen Drosselorgan 4 und dem zugehörigen Rechner 12. Der Aufbau außerhalb des Rechners 12 weist gegenüber Fig. 1 den einzigen Unterschied auf, daß innerhalb des Drosselorgans 4 der Teller 58 vorhanden ist. Liegt der Teller 58 an der Kreislochblende 52 an, so ist das Drosselorgan 4 geschlossen. Ein Durchfluß des Strömungsmediums ist dann nicht möglich.

Auch nach der Fig. 2 besteht der Rechner 12 aus dem Rechenblock 20 und dem Steuerblock 21. Der Rechenblock 20 der Fig. 2 weist gegenüber dem der Fig. 1 den einzigen Unterschied auf, daß zwischen den Eingang 15 und den Eingang des Multiplizierers 22 ein von einem Relais 29 betätigter Schaltkontakt 30 geschaltet ist.

Der Steuerblock 21 weist größere Unterschiede auf: Zusätzlich zum Schwellwertschalter 27 sind ein zweiter Schwellwertschalter 31 und ein dritter Schwellwertschalter 32, ein NOR-Glied 33, ein Inverter 34, ein erstes Flipflop 35 und ein zweites Flipflop 36 sowie ein weiteres Verzögerunsglied 37 vorhanden. Dieses Verzögerungsglied 37 bewirkt in gleicher Weise wie das Verzögerunsglied 28 ein Abfallverzögerung, so daß also ein HIGH-Impuls verlängert wird.

Die Eingänge der Schwellwertschalter 27 und 31 sind mit dem Eingang 15 des Rechners 12 verbunden, der Eingang des Schwellwertschalters 32 ist mit dem Eingang 13 des Rechners 12 verbunden. Der Ausgang des Schwellwertschalters 31 ist mit dem einen Eingang eines NOR-Glieds 33 verbunden, dessen Ausgang mit dem Reset-Eingang des Flipflops 35 verbunden ist. Der Ausgang des Schwellwertschalters 32 ist über einen Inverter 34 mit dem Reset-Eingang des Flipflops 36 verbunden.

Die Schwellwertschalter 31 und 32 haben folgendes Schaltverhalten: Unterhalb eines Differenzdrucks p_{Uaus} hat der Ausgang des Schwellwertschalters 31 LOW-Signal. Bei steigendem Wert des Differenzdrucks wechselt sein Ausgangssignal von LOW auf HIGH, sobald der Differenzdruck über den oberen Schwellenwert p_{Uein} steigt, und bei dann fallendem Wert des Differenzdrucks wechselt sein Ausgangssignal von HIGH auf LOW, sobald der Differenzdruck wieder unter den unteren Schwellenwert p_{Uaus} fällt. Es besteht also eine Hysterese der Größe p_{Uein} - p_{Uaus}. Die beiden Schwellenwerte p_{Uein} und p_{Uaus} liegen deutlich unter den Schwellenwerten pₑᵢₙ und pₐᵤₛ des Schwellwertschalters 27. Unterhalb einer Temperaturdifferenz T_{Uaus} hat der Ausgang des Schwellwertschalters 32 LOW-Signal. Bei steigendem Wert der Temperaturdifferenz wechselt sein Ausgangssignal von LOW auf HIGH, sobald die Temperaturdifferenz über den oberen Schwellenwert T_{Uein} steigt, und bei dann fallendem Wert der Temperaturdifferenz wechselt sein Ausgangssignal von HIGH auf LOW, sobald die Temperaturdifferenz wieder unter den unteren Schwellenwert T_{Uaus} fällt. Es besteht also eine Hysterese der Größe T_{Uein} - T_{Uaus}.

Zusätzlich ist ein Taktgenerator 39 vorhanden, dessen Ausgang mit je einem Eingang eines zweiten ODER-Glieds 40 und eines dritten ODER-Glieds 41 sowie mit den Set-Eingängen der Flipflops 35 und 36 verbunden ist. Der zweite Eingang des ODER-Glieds 40 ist mit dem Ausgang des UND-Glieds 38 verbunden, während der zweite Eingang des ODER-Glieds 41 mit dem Ausgang des Verzögerungsglieds 28 verbunden ist. Die Ausgänge der beiden ODER-Glieder 40 und 41 führen zu zwei Eingängen eines Wandlers 42. Der Ausgang des Wandlers 42 ist mit dem Ausgang 17 des Rechners 12 verbunden und steuert den Antrieb 3.

Der Ausgang des ODER-Glieds 40 wirkt außerdem auf das Relais 29. Der Ausgang des ODER-Glieds 41 ist zusätzlich auf den zweiten Eingang des Multiplizierers 22 geführt sowie auf den Eingang des Verzögerungsglieds 37, dessen Ausgang mit dem zweiten Eingang des NOR-Glieds 33 verbunden ist.

Nachfolgend wird die Funktion beschrieben, soweit sie gegenüber derjenigen der Vorrichtung nach Fig. 1 abweicht. Vorerst wird dabei auf die durch den Taktgenerator 39 erzielte Wirkung nicht eingegangen und unterstellt, dieser gebe dauernd LOW-Signal ab.

Bevor auf die Wirkungsweise insgesamt eingegangen wird, sei noch die Funktion des Wandlers 42 beschrieben. Dieser Wandler 42 hat zwei Eingänge, an denen je nach Schaltzustand der vorgeschalteten Glieder entweder LOW- oder HIGH-Signal anliegen kann. Es handelt sich also um zwei Zweipunkt-Signale. Diese werden nun vom Wandler 42 in ein Dreipunkt-Signal umgewandelt. Liegt an dem mit dem ODER-Glied 40 verbundenen Eingang LOW-Signal an, so führt auch der Ausgang des Wandlers 42 LOW-Signal, und zwar unabhängig vom Zustand des anderen Eingangs. Liegt an dem mit dem ODER-Glied 40 verbundenen Eingang HIGH-Signal und an dem mit dem ODER-Glied 41 verbundenen Eingang LOW-Signal an, so führt der Ausgang des Wandlers 42 ein Signal EINS. Liegt an beiden Eingängen des Wandlers 42 HIGH-Signal an, so führt der Ausgang des Wandlers 42 ein Signal ZWEI.

Der Ausgang des Wandlers 42 kann also drei Zustände annehmen: die Signale LOW, EINS und ZWEI. Der Ausgang des Wandlers 42 wirkt auf den Antrieb 3, der ebenfalls drei Stellungen annehmen kann: Stellung 0 (geschlossen), Stellung I (kleinere Öffnung) und Stellung II (größere Öffnung). Die Wirkungsweise ist nun die, daß der Wandler 42 den Antrieb 3 in die Stellung 0 steuert, wenn sein Ausgang LOW ist, daß er ihn in die Stellung I steuert, wenn sein Ausgang Signal EINS führt, und daß er ihn in die Stellung II steuert, wenn sein Ausgang Signal ZWEI führt.

Es sei nun angenommen, das Drosselorgan 4 befinde sich in der in der Fig. 2 gezeigten Stellung, die der Stellung II des Antriebs 3 entspricht. Dieser Zustand liegt dann vor, wenn der Ausgang des Schwellwertschalters 32 das Signal HIGH hat und wenn der Ausgangs des Schwellwertschalters 27 ebenfalls das Signal HIGH hat. Weil somit zwangsläufig auch beim Schwellwertschalter 31 die Druckdifferenz p_{Uein} überschritten ist, führen die Ausgänge der Schwellwertschalter 27, 31 und 32 allesamt HIGH-Signal. Die Reset-Eingänge der beiden Flipflops 35 und 36 liegen wegen der Invertierung durch das NOR-Glied 33 bzw. den Inverter 34 auf LOW-Signal. Somit sind die Flipflops 35 und 36 nicht zurückgesetzt, folglich durch einen vorgängigen Setzimpuls vom Taktgenerator 39 gesetzt. Entsprechend führen die Ausgänge der beiden Flipflops 35 und 36 ebenfalls HIGH-Signal. Da die HIGH-Signale auch die beiden ODER-Glieder 40 und 41 durchlaufen, führen beide Eingänge des Wandlers 42 HIGH-Signal, so daß am Ausgang des Wandlers 42 das Signal ZWEI anliegt und sich folglich das Drosselorgan 4 in der gezeichneten Stellung befindet.

Wie schon beim ersten Ausführungsbeispiel beschrieben, erhält der Multiplizierer 22 die Information darüber, daß die Stellung II vorliegt. Dies geschieht hier durch die Verbindung des Ausgangs des ODER-Glieds 41 mit dem Eingang des Multiplizierers 22, wobei das ODER-Glied 41 an seinem Ausgang immer dann HIGH-Signal führt, wenn die Stellung II vorliegt. Da das Ausgangssignal des ODER-Glieds 40 ebenfalls HIGH ist, befindet sich das Relais 29 in erregter Stellung, so daß der Kontakt 30 geschlossen ist. Ist dieser Kontakt 30 geschlossen, so gelangt das Signal des Druckdifferenzsensors 6 auf den Eingang des Multiplizierers 22 und folglich wird, wie schon beschrieben, die Druckdifferenz bei der Berechnung von Volumenstrom und Wärmemenge berücksichtigt.

Nun sei angenommen, die vom Druckdifferenzsensor 6 erfaßte Druckdifferenz falle unter den Wert pₐᵤₛ. Dann wechselt das Ausgangssignal des Schwellwertschalters 27 von HIGH auf LOW. Verzögert durch das Verzögerungsglied 28 gelangt der Signalwechsel auch auf das ODER-Glied 41 und somit auf den mit dessen Ausgang verbundenen Eingang des Wandlers 42. In der Folge ändert der Wandler 42 den Zustand seines Ausgangs von Signal ZWEI in Signal EINS, worauf der Antrieb 3 die Stellung wechselt, und zwar von der Stellung II in die Stellung I. Damit befindet sich nun der größere Zylinder 56 innerhalb der Kreislochblende 52.

Der Signalwechsel am Ausgang des ODER-Glieds 41 führt auch dazu, daß das Signal am mit dem Ausgang des ODER-Glieds 41 verbundenen Eingang des Multiplizierers 22 auf LOW wechselt. Folglich berücksichtigt der Multiplizierer 22 den zu der Stellung I gehörenden Beiwert bei der Berechnung der Durchflußmenge.

Fällt nun der Differenzdruck weiter, so daß auch der am Schwellwertschalter 31 eingestellte Wert von p_{Uaus} unterschritten wird, so wechselt das Signal am Ausgang des Schwellwertschalters 31 von HIGH auf LOW. Der Signalwechsel HIGH-LOW wird vom NOR-Glied 33 umgesetzt in einen Signalwechsel LOW-HIGH, sofern kein Taktimpuls vom Taktgeber 39 vorliegt, der über das ODER-Glied 41 zum Verzögerungsglied 37 gelangt und dort verlängert wird. Ist das der Fall, so wird das Flipflop 35 zurückgesetzt und an seinem Ausgang erscheint folglich ebenfalls LOW-Signal. Da nun nicht mehr beide Eingänge des UND-Glieds 38 HIGH haben, wechselt das Signal am Ausgang des UND-Glieds 38 auf LOW. Dieses Signal erscheint auch am mit dem Ausgang des ODER-Glieds 40 verbundenen Eingang des Wandlers 42. Da somit beiden Eingänge des Wandlers 42 LOW-Signal führen, folgt am Ausgang des Wandlers 42 LOW-Signal, wodurch der Antrieb 3 das Drosselorgan 4 so bewegt, daß der Teller 58 an der Kreislochblende 52 anliegt. Damit ist die Stellung 0 erreicht.

Wegen des Signalwechsels von HIGH auf LOW am Ausgang des ODER-Glieds 40 fällt auch die Erregung des Relais 29 weg, so daß der Kontakt 30 öffnet. Damit erhält der Multiplizierer 22 kein Signal vom Differenzdrucksensor 6; das Signal ist Null. Die nachfolgende Multiplikation mit dem Beiwert ergibt Null. Damit ergibt auch die Multiplikation im Multiplizierer 23 Null. Folglich erhöht sich auch der Wert der beiden Integratoren 24 und 25 nicht mehr. Die Durchflußrate und der Wärmestrom sind damit Null, die kumulierte Durchflußmenge und die Wärmemenge werden nicht weiter erhöht. Dadurch wird also erreicht, daß die Meßdaten der Erfassungsmittel, Differenzdrucksensor 6 und Temperaturdifferenz-Erfassungsglied 9, ignoriert werden.

Die gleiche Wirkung wird erreicht, wenn der Wert der Temperaturdifferenz den Grenzwert T_{Uaus} unterschreitet. Dann wird das UND-Glied 38 dadurch gesperrt, daß an seinem über den Inverter 34 und das Flipflop 36 mit dem Ausgang des Schwellwertschalters 32 verbundenen Eingang LOW-Signal auftritt. Auch dadurch wird die Stellung 0 erreicht.

Das bedeutet nun, daß das Drosselorgan immer dann in die Schließstellung (Stellung 0) geht, wenn die Temperaturdifferenz zwischen Vorlauf- und Rücklaufleitung sehr klein wird oder wenn die Druckdifferenz über dem Drosselorgan sehr klein wird. In vorteilhafter Weise wird die Schließstellung also dann angefahren, wenn Temperaturdifferenz oder Druckdifferenz so klein werden, daß deren Messung nicht mehr mit genügender Genauigkeit erfolgen kann.

Ist die Schließstellung (Stellung 0) erreicht, so steigt zwar die Druckdifferenz sofort wieder an und der Ausgang des Schwellwertschalters 31 wechselt wieder auf HIGH. Dieser Signalwechsel auf HIGH wird jedoch am Ausgang des Flipflops 35 nicht wirksam. Folglich bleibt zunächst das Drosselorgan 4 in der geschlossenen Stellung (Stellung 0). Gleichermaßen würde ein Anstieg der Temperaturdifferenz über den Wert t_{Uein} kein Öffnen des Drosselorgans 4 bewirken. Der Taktgenerator 39 gibt periodisch, z.B. aller 15 Minuten, ein HIGH-Signal bestimmter Länge ab, während er in der Zwischenzeit LOW-Signal abgibt.

Durch die ansteigende Flanke eines solchen Taktimpulses werden die beiden Flipflops 35, 36 gesetzt. Erst durch dieses Setzen der Flipflops 35, 36 wird erreicht, daß ihre Ausgangssignale den Ausgangssignalen der Schwellwertschalter 31 und 32 entsprechen. Bis zum Eintreffen des Taktimpulses vom Taktgenerator 39 wird also das Drosselorgan 4 in der Stellung 0 gehalten.

Durch einen Taktimpuls des Taktgenerators 39 wird außerdem erreicht, daß die Ausgänge der beiden ODER-Glieder 40 und 41 auf HIGH wechseln. Damit sind beide Eingänge des Wandlers 42 auf HIGH, so daß in der Folge das Drosselorgan 4 über den Antrieb 3 zwangsweise in die Stellung II gesteuert wird. Anschließend wird das Drosselorgan 4 je nach den jetzt wirksamen Werten für die Druckdifferenz und die Temperaturdifferenz gemäß vorangehender Beschreibung in die richtige Stellung gesteuert.

Die Ausführungsform des Drosselorgans 4 hat den Vorteil, daß bei ihr keine besonderen Abdichtungsprobleme bestehen, da lediglich die Welle 57 durch das Gehäuse geführt und abgedichtet werden muß. Außerdem ist die Genauigkeit der Positionierung des Verdrängungskörpers 53 unkritisch. Kleinere Unterschiede in der Position des Verdrängungskörpers 53 beeinflussen die Größe des Ringspaltes 54 nicht. Deshalb kann auch der Antrieb 3 in vorteilhafter Weise sehr einfach ausgeführt sein. Zudem verändern thermisch bedingte Hubänderungen die Größe des Ringspaltes 54 nicht.

Es ist vorteilhaft, die Kreislochblende 52 an ihrem inneren Rand scharfkantig auszuführen. Damit wird die Unempfindlichkeit gegen Ungenauigkeiten in der Position des Verdrängungskörpers 53 weiter gesteigert.

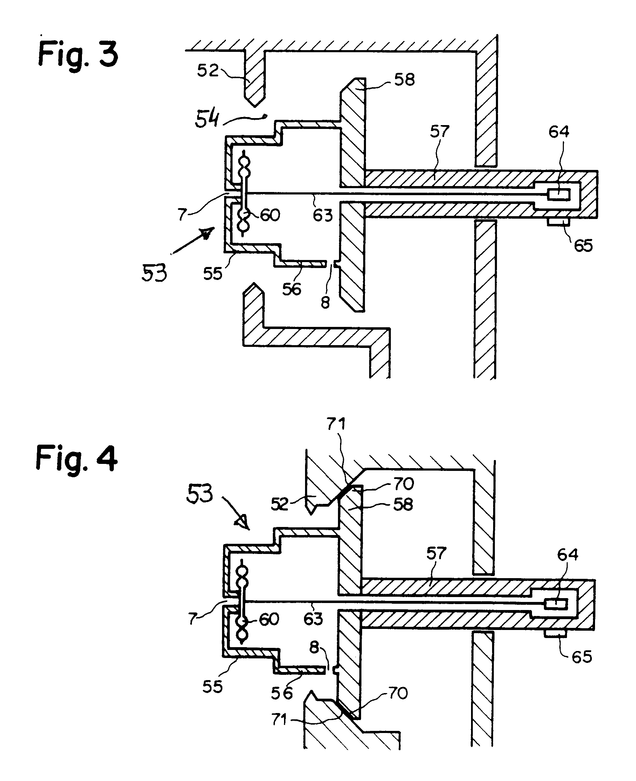

Es ist vorteilhaft, die Mittel zur Erfassung der Druckdifferenz innerhalb des Verdrängungskörpers 53 anzuordnen. Die Fig. 3 zeigt den Aufbau eines solchen Verdrängungskörpers 53. Innerhalb des Verdrängungskörpers 53 befindet sich ein Druckmeßelement 60, das formschlüssig mit dem Verdrängungskörper 53 verbunden ist und über die erste Öffnung 7 und die zweite Öffnung 8 mit den in der Strömungsrichtung vor und hinter der Kreislochblende 52 liegenden Räumen in Verbindung steht, so daß auf das Druckmeßelement 60 direkt der Differenzdruck wirkt. Die Verformung des Druckmeßelements 60 wird über eine Stange 63 direkt auf ein aus einem Magneten 64 und einer Hallsonde 65 bestehendes Meßsystem übertragen. Die Druckdifferenz wird somit in einen Weg umgeformt, dessen Wert als Spannung an der Hallsonde 65 abgegriffen werden kann. Dieser Spannungswert kann, wie bei den Ausführungsbeispielen nach Fig. 1 und 2 angegeben, an den Rechner 12 übermittelt werden.

Es ist außerdem vorteilhaft, wenn die Öffnungen 7 und 8 so angeordnet sind, daß sie in Strömungsrichtung gesehen auf einer Seite des durch den Teller 58 verschlossenen Drosselorgans liegen, wie dies in der Fig. 4 dargestellt ist. Der Teller 58 weist eine Dichtfläche 70 auf, die in der Schließstellung (Stellung 0) gegen einen Sitz 71 im Gehäuse 50 drückt. Damit wird erreicht, daß bei geschlossenem Ventil der Differenzdruck am Druckmeßelement 60 immer Null ist. Dadurch bietet sich die Möglichkeit, das Ausgangssignal des aus dem Magneten 64 und der Hallsonde 65 bestehenden Meßsystems auf Null abzugleichen. Dieser Abgleich kann mit Vorteil innerhalb des Rechners 12 erfolgen, und zwar immer dann, wenn das Drosselorgan die Stellung 0 erreicht. Somit ist ein geschlossenem Drosselorgan 4 eine Korrektur des Meßwertes der Druckdifferenz ausführbar.

Der Umschalter 26 kann taktgesteuert sein. Damit ist es möglich, zyklisch hintereinander die folgenden Meßwerte anzuzeigen: Durchflußrate, beispielsweise in Liter/Stunde, kumulierte Durchflußmenge, beispielsweise in Kubikmeter, Wärmestrom, beispielsweise in Kilojoule/Stunde und Wärmemenge, beispielsweise in Kilowattstunden.

Bei den vorstehend genannten Ausführungsbeispielen ist das Drosselorgan 4 mitsamt den zugehörigen Elementen in der Vorlaufleitung 1 eines Heizkreises eingebaut. Es ist aber auch möglich, das Drosselorgan 4 in die Rücklaufleitung 1 einzubauen.

## Patentansprüche

1. Vorrichtung zur Messung des Durchflusses und/oder von Wärmemengen mit Mitteln (6, 27; 60, 64, 65) zur Erfassung der Druckdifferenz des Strömungsmediums über einem Drosselorgan (4), das mehrere diskret abgestufte Querschnitte (54) aufweist, wobei jeweils einer dieser Querschnitte (54) wirksam ist, mit einem Antrieb (3) zur Umschaltung von einem auf einen anderen der Querschnitte (54), der von den Mitteln (6, 27; 60, 64, 65) zur Erfassung der Druckdifferenz des Strömungsmediums steuerbar ist, dadurch gekennzeichnet, daß ein Rechner (12) vorhanden ist, der die Durchflußmenge und/oder die Wärmemenge aus den Erfassungsdaten berechnet, und daß das Drosselorgan (4) eine Kreislochblende (52) und einen in dieser verschiebbar angeordneten Verdrängungskörper (53) mit diskret abgestuften Querschnitten (55, 56) aufweist.

2. Vorrichtung nach Anspruch 1, dadurch gekennzeichnet, daß die Kreislochblende (52) scharfkantig ist.

3. Vorrichtung nach Anspruch 1 oder 2, dadurch gekennzeichnet, daß der Verdrängungskörper (53) rotationssymmetrisch ist und längs seiner Achse (57) aus einzelnen Zylindern (55, 56) mit diskret abgestuften Außendurchmessern besteht.

4. Vorrichtung nach einem der Ansprüche 1 bis 3, dadurch gekennzeichnet, daß die Mittel (60) zur Erfassung der Druckdifferenz innerhalb des Verdrängungskörpers (53) angeordnet sind.

5. Vorrichtung nach einem der Ansprüche 1 bis 4, dadurch gekennzeichnet, daß das Drosselorgan (4) eine weitere Stellung besitzt, in der es geschlossen ist, und daß Mittel (29, 30) vorhanden sind, durch die der Rechner (12) in dieser Stellung des Drosselorgans (4) die Meßdaten der Erfassungsmittel (6, 9) ignoriert.

6. Vorrichtung nach Anspruch 5, dadurch gekennzeichnet, daß der Rechner (12) Mittel (31, 33, 35, 38, 40; 32, 34, 36) enthält, durch die das Drosselorgan (4) in die Stellung "geschlossen" steuerbar ist, wenn eine Differenz zwischen Vorlauftemperatur und Rücklauftemperatur einen bestimmten Grenzwert (T_{Uaus}) unterschreitet und/oder wenn die Druckdifferenz über dem Drosselorgan (4) einen bestimmten Grenzwert (p_{Uaus}) unterschreitet.

7. Vorrichtung nach Anspruch 5, dadurch gekennzeichnet, daß der Verdrängungskörper (53) einen Teller (58) mit einer Dichtfläche (70) aufweist, der gegen einen im Gehäuse (50) angeordneten Sitz (71) bewegbar ist, und daß Öffnungen (7, 8), durch die ein Differenzdrucksensor (6) mit den Räumen vor und hinter dem Drosselorgan (4) verbunden ist, auf der bezogen auf die Strömungsrichtung gleichen Seite des Tellers (58) angeordnet sind.

8. Vorrichtung nach Anspruch 7, dadurch gekennzeichnet, daß durch den Rechner (12) bei geschlossenem Drosselorgan (4) eine Korrektur des Meßwertes der Druckdifferenz ausführbar ist.

## Claims

1. A device for measuring a flow rate and/or quantities of heat comprising means (6, 27; 60, 64, 65) for detecting the pressure difference of the flow medium across a throttle member (4) which has a plurality of discretely stepped cross-sections (54), wherein a respective one of said cross-sections (54) is operative, comprising a drive (3) for switching over from one of the cross-sections (54) to another, which is controllable by the means (6, 27; 60, 64, 65) for detecting the pressure difference of the flow medium, characterised in that there is provided a computer (12) which computes the quantitative flow rate and/or the amount of heat from the detection data, and that the throttle member (4) has a circular-hole aperture member (52) and a displacement body (53) arranged displaceably therein and having discretely stepped cross-sections (55, 56).

2. A device according to claim 1 characterised in that the circular-hole aperture member (52) is sharp-edged.

3. A device according to claim 1 or claim 2 characterised in that the displacement body (53) is rotationally symmetrical and along its axis (57) comprises individual cylinders (55, 56) with discretely stepped outside diameters.

4. A device according to one of claims 1 to 3 characterised in that the means (60) for detecting the pressure difference are disposed within the displacement body (53).

5. A device according to one of claims 1 to 4 characterised in that the throttle member (4) has a further position in which it is closed and that there are means (29, 30) by which the computer (12) ignores the measurement data of the detection means (6, 9) in that position of the throttle member (4).

6. A device according to claim 5 characterised in that the computer (12) includes means (31, 33, 35, 38, 40; 32, 34, 36) by which the throttle member (4) can be controlled into the position 'closed' when a difference between a feed temperature and a return temperature is below a given limit value (T_{Uaus}) and/or if the pressure difference across the throttle member (4) is below a given limit value (p_{Uaus}).

7. A device according to claim 5 characterised in that the displacement body (53) has a plate (58) with a sealing surface (70) which is movable against a seat (71) disposed in the housing (50), and that openings (7, 8) through which a differential pressure sensor (6) is connected to the spaces upstream and downstream of the throttle member (4) are arranged on the same side of the plate (58) relative to the flow direction.

8. A device according to claim 7 characterised in that a correction of the measurement value of the pressure difference can be effected by the computer (12) when the throttle member (4) is closed.

## Revendications

1. Dispositif de mesure du débit et/ou des quantités de chaleur avec des moyens (6, 27 ; 60, 64, 65) pour capter la différence de pression du fluide en écoulement par l'intermédiaire d'un organe d'étranglement (4), qui comporte plusieurs sections (54) étagées de façon discrète, à chaque fois une desdites sections (54) étant en action, ainsi qu'un mécanisme d'entraînement (3) pour assurer la commutation d'une des sections (54) à une autre et qui peut être commandé par les moyens (6, 27 ; 60, 64, 65) de captage de la différence de pression du fluide en écoulement, caractérisé en ce qu'il est prévu un ordinateur (12), qui calcule le débit et/ou la quantité de chaleur à partir des données captées et en ce que l'organe d'étranglement (4) comporte un diaphragme à trou circulaire (52) ainsi qu'un corps de refoulement (53), disposé de façon mobile dans celui-ci et ayant des sections (55, 56) étagées de façon discrète.

2. Dispositif selon la revendication 1, caractérisé en ce que le diaphragme à trou circulaire (52) est pourvu d'arête vive.

3. Dispositif selon la revendication 1 ou 2, caractérisé en ce que le corps de refoulement (53) a une symétrie de révolution et se compose, le long de son axe (57), de différents cylindres (55, 56) ayant des diamètres extérieurs étagés de façon discrète.

4. Dispositif selon une des revendications 1 à 3, caractérisé en ce que les moyens (60) de captage de la différence de pression sont disposés à l'intérieur du corps de refoulement (53).

5. Dispositif selon une des revendications 1 à 4, caractérisé en ce que l'organe d'étranglement (4) comporte une autre position dans laquelle il est fermé et en ce qu'il est prévu des moyens (29, 30) par lesquels l'ordinateur (12) ignore, dans cette position de l'organe d'étranglement (4), les données de mesure des moyens de captage (6, 9).

6. Dispositif selon la revendication 5, caractérisé en ce que l'ordinateur (12) contient des moyens (31, 33, 35, 38, 40 ; 32, 34, 36) par lesquels l'organe d'étranglement (4) peut être commandé dans la position "fermé" lorsqu'une différence entre la température d'entrée et la température de sortie tombe en dessous d'une valeur limite déterminée (T_{Uaus}) et/ou lorsque la différence de pression dans l'organe d'étranglement (4) tombe en dessous d'une valeur limite déterminée (p_{Uaus}).

7. Dispositif selon la revendication 5, caractérisé en ce que le corps de refoulement (53) comporte un plateau (58) pourvu d'une surface d'étanchéité (70) qui peut être appliquée contre un siège (71) disposé dans le carter (50) et en ce que des ouvertures (7, 8), par lesquelles un capteur de pression différentielle (6) est relié au volume situé avant et après l'organe d'étranglement (4), sont disposées, en considérant le sens d'écoulement, sur le même côté du plateau (58).

8. Dispositif selon la revendication 7, caractérisé en ce que, quand l'organe d'étranglement (4) est fermé, une correction de la valeur de mesure de la différence de pression peut être effectuée par l'ordinateur (12).
